# EUROPEAN PATENT APPLICATION

(11) **EP 4 575 925 A1**
(43) Date of publication of application: **25.06.2025**
(21) Application number: 23383368.0
(22) Date of filing: 22.12.2023
(51) Int. Cl.: G06N 10/60, G06N 10/80, G06N 3/088, G06E 3/00, G06N 10/40, G06N 20/00

(54) **SIMULATION OF SINGLE QUBIT QUANTUM ALGORITHM USING LASER BEAMS AND RELATED METHODS**

(71) Applicant: Multiverse Computing S.L., 20014 Donostia-San Sebastian (ES)
(72) Inventor: ORÚS, Roman, 20014 Donostia / San Sebastián (ES); BERMEJO, Pablo, 20014 Donostia / San Sebastián (ES); VARGAS, Miguel, 20014 Donostia / San Sebastián (ES); MOLINA, Gabriel, 20014 Donostia / San Sebastián (ES)
(74) Representative: Balder IP Law, S.L.

(57) **Abstract**

The method and system for simulating a quantum algorithm involves the use of electromagnetic waves, specifically laser beams. The quantum state representation is mapped to a polarization state representation, which is manipulated using a polarization manipulation device. An optimization device is used to minimize a cost function, with data inputted through a data input device. The result of the minimization of the cost function is interpreted using a data interpretation device. The system includes a light source, polarization manipulation and measurement devices, an optimization device, a data input device, and a data interpretation device. Additional components include a measurement module and a data entry module.

## Description

### TECHNICAL FIELD

The invention pertains to the field of quantum computing, specifically to the simulation of quantum algorithms using laser beams. It involves the mapping of the Bloch sphere of a qubit to the Poincare sphere of a laser beam and the optimization of the polarization of the laser beam.

### BACKGROUND

Quantum computing is a rapidly growing field that leverages the principles of quantum mechanics to perform computations. One of the fundamental units of quantum computing is the qubit, which can exist in multiple states simultaneously, unlike classical bits that can only be in one state at a time. This property of qubits allows quantum computers to process a large amount of data simultaneously, making them potentially more powerful than classical computers for certain tasks. One such task is data clustering, which is a common technique used in machine learning and data analysis to group similar data points together. Traditional methods of data clustering can be computationally intensive, especially for large datasets. Similarly, the field of optics, specifically laser technology, has seen significant advancements. Lasers are known for their ability to produce light with a specific wavelength and polarization. The manipulation of these properties has been used in various applications, from communication systems to medical devices. However, the potential of combining quantum computing principles with laser technology for data processing tasks is yet to be fully explored.

### SUMMARY

In a first aspect, in accordance with some embodiments, a method is provided for simulating a quantum algorithm, the method comprising: providing a light source for emitting electromagnetic waves; mapping a quantum state representation to a polarization state representation; manipulating a polarization of the electromagnetic waves using a polarization manipulation device; minimizing a cost function using an optimization device, thereby producing an optimal clustering solution; inputting data through a data input device; and interpreting the optimal clustering solution using a data interpretation device.

In some embodiments, the electromagnetic waves may be laser beams.

In some embodiments, the quantum state representation may be a Bloch sphere.

In some embodiments, the polarization state representation may be a Poincare sphere.

In some embodiments, the polarization manipulation device may comprise a plurality of plates and polarizers.

In some embodiments, the cost function may be a clustering cost function.

In some embodiments, the data may be a set that is to be clustered.

In a second aspect, in accordance with some embodiments, a system is provided for simulating a quantum algorithm, the system comprising: a light source for emitting electromagnetic waves; a polarization manipulation device for manipulating a polarization of the electromagnetic waves; a detection module for measuring a polarization of the electromagnetic waves; an optimization device for optimizing a configuration of the polarization manipulation device to minimize a cost function, thereby producing an optimal clustering solution; a data input device for inputting the cost function; and a data interpretation device for interpreting the optimal clustering solution.

In some embodiments, the light source may be a laser beam.

In some embodiments, the polarization manipulation device may comprise plates and polarizers.

In some embodiments, the optimization device may be a classical optimizer.

In some embodiments, the cost function may be a clustering cost function.

In some embodiments, the data input device may input the cost function depending on a data set that is to be clustered.

In some embodiments, the data interpretation device interprets the optimal clustering solution in terms of the data set that is to be clustered.

In some embodiments, the detection module further comprises a measurement module configured to measure the polarization of the electromagnetic waves.

### LIST OF FIGURES

FIG. **1** illustrates, in a flowchart, operations for simulating a quantum algorithm using laser beam polarization in accordance with certain embodiments.
FIG. **1A** illustrates, in a flowchart, operations for utilizing laser beams in the simulation in accordance with certain embodiments.
FIG. **1B** illustrates, in a flowchart, operations for mapping quantum state representation to polarization state representation in accordance with certain embodiments.
FIG. **1C** illustrates, in a flowchart, operations for manipulating the polarization of electromagnetic waves in accordance with certain embodiments.
FIG. **1D** illustrates, in a flowchart, operations for minimizing a clustering cost function in accordance with certain embodiments.
FIG. **1E** illustrates, in a flowchart, operations for inputting a data set for clustering in accordance with certain embodiments.
FIG. **2** illustrates, in a block diagram, the main components of a Quantum Algorithm Simulation System in accordance with certain embodiments.
FIG. **2A** illustrates, in a block diagram, the sub-components of the Light Source and Polarization Control System in accordance with certain embodiments.
FIG. **2B** illustrates, in a block diagram, the sub-components of the Optimization and Data Entry System in accordance with certain embodiments.

### DETAILED DESCRIPTION

Various embodiments in accordance with the teachings herein will be described below to provide an example of at least one embodiment of the claimed subject matter. No embodiment described herein limits any claimed subject matter. The claimed subject matter is not limited to devices, systems, or methods having all of the features of any one of the devices, systems, or methods described below or to features common to multiple or all of the devices, systems, or methods described herein. It is possible that there may be a device, system, or method described herein that is not an embodiment of any claimed subject matter. Any subject matter that is described herein that is not claimed in this document may be the subject matter of another protective instrument, for example, a continuing patent application, and the applicants, inventors, or owners do not intend to abandon, disclaim, or dedicate to the public any such subject matter by its disclosure in this document.

It will be appreciated that for simplicity and clarity of Illustration, where considered appropriate, reference numerals may be repeated among the figures to indicate corresponding or analogous elements. In addition, numerous specific details are set forth in order to provide a thorough understanding of the embodiments described herein. However, it will be understood by those of ordinary skill in the art that the embodiments described herein may be practiced without these specific details. In other instances, well-known methods, procedures, and components have not been described in detail so as not to obscure the embodiments described herein. Also, the description is not to be considered as limiting the scope of the embodiments described herein.

It should also be noted that the terms "coupled" or "coupling" as used herein can have several different meanings depending in the context in which these terms are used. For example, the terms coupled or coupling can have a mechanical or electrical connotation. For example, as used herein, the terms coupled or coupling can indicate that two elements or devices can be directly connected to one another or connected to one another through one or more intermediate elements or devices via an electrical signal, electrical connection, or a mechanical element depending on the particular context.

It should also be noted that, as used herein, the wording "and/or" is intended to represent an inclusive-or. That is, "X and/or Y" is intended to mean X or Y or both, for example. As a further example, "X, Y, and/or Z" is intended to mean X or Y or Z or any combination thereof.

It should be noted that terms of degree such as "substantially", "about" and "approximately" as used herein mean a reasonable amount of deviation of the modified term such that the end result is not significantly changed. These terms of degree may also be construed as including a deviation of the modified term, such as by 1%, 2%, 5%, or 10%, for example, if this deviation does not negate the meaning of the term it modifies.

Furthermore, the recitation of numerical ranges by endpoints herein includes all numbers and fractions subsumed within that range (e.g., 1 to 5 includes 1, 1.5, 2, 2.75, 3, 3.90, 4, and 5). It is also to be understood that all numbers and fractions thereof are presumed to be modified by the term "about" which means a variation of up to a certain amount of the number to which reference is being made if the end result is not significantly changed, such as 1%, 2%, 5%, or 10%, for example.

It should also be noted that the use of the term "window" in conjunction with describing the operation of any system or method described herein is meant to be understood as describing a user interface for performing initialization, configuration, or other user operations.

The example embodiments of the devices, systems, or methods described in accordance with the teachings herein may be implemented as a combination of hardware and software. For example, the embodiments described herein may be implemented, at least in part, by using one or more computer programs, executing on one or more programmable devices comprising at least one processing element and at least one storage element (i.e., at least one volatile memory element and at least one non-volatile memory element). The hardware may comprise input devices including at least one of a touch screen, a keyboard, a mouse, buttons, keys, sliders, and the like, as well as one or more of a display, a printer, and the like depending on the implementation of the hardware.

It should also be noted that there may be some elements that are used to implement at least part of the embodiments described herein that may be implemented via software that is written in a high-level procedural language such as object oriented programming. The program code may be written in C⁺⁺, C#, JavaScript, Python, or any other suitable programming language and may comprise modules or classes, as is known to those skilled in object-oriented programming. Alternatively, or in addition thereto, some of these elements implemented via software may be written in assembly language, machine language, or firmware as needed. In either case, the language may be a compiled or interpreted language.

At least some of these software programs may be stored on a computer readable medium such as, but not limited to, a ROM, a magnetic disk, an optical disc, a USB key, and the like that is readable by a device having a processor, an operating system, and the associated hardware and software that is necessary to implement the functionality of at least one of the embodiments described herein. The software program code, when read by the device, configures the device to operate in a new, specific, and predefined manner (e.g., as a specific-purpose computer) in order to perform at least one of the methods described herein.

At least some of the programs associated with the devices, systems, and methods of the embodiments described herein may be capable of being distributed in a computer program product comprising a computer readable medium that bears computer usable instructions, such as program code, for one or more processing units. The medium may be provided in various forms, including non-transitory forms such as, but not limited to, one or more diskettes, compact disks, tapes, chips, and magnetic and electronic storage. In alternative embodiments, the medium may be transitory in nature such as, but not limited to, wire-line transmissions, satellite transmissions, internet transmissions (e.g., downloads), media, digital and analog signals, and the like. The computer useable instructions may also be in various formats, including compiled and non-compiled code.

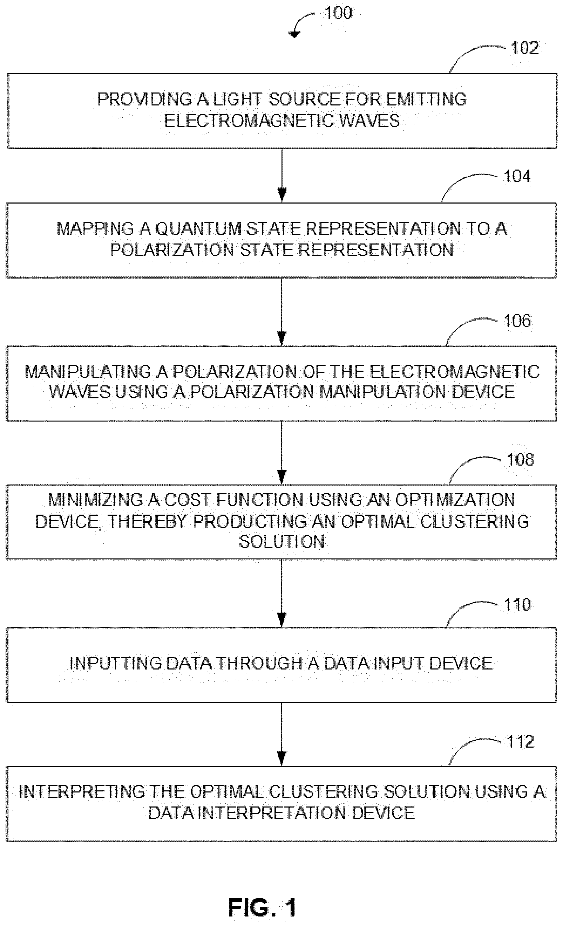

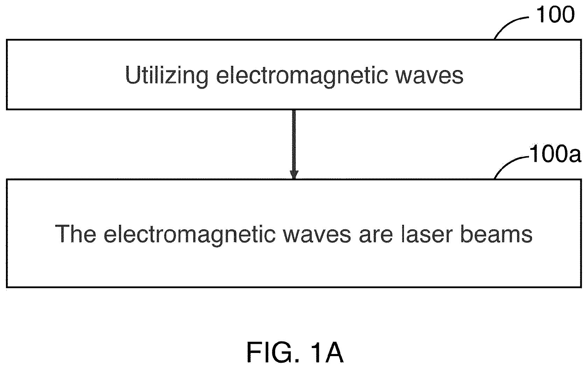

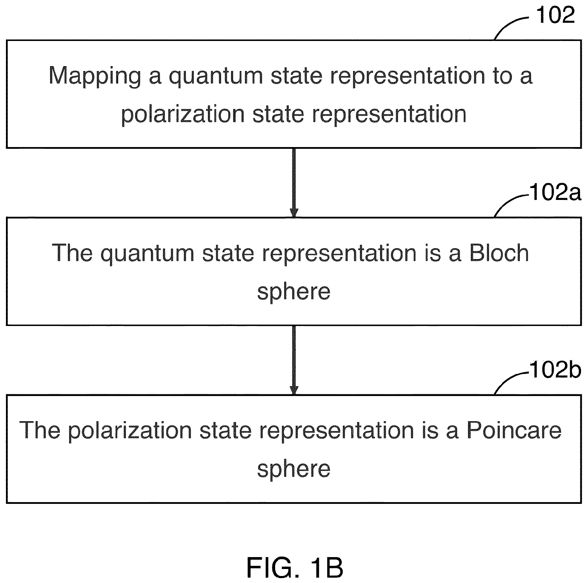

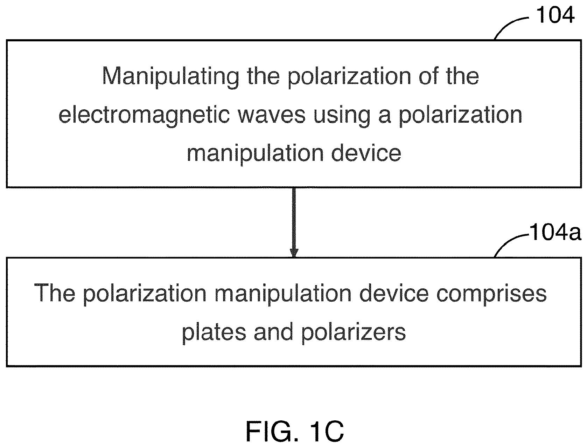

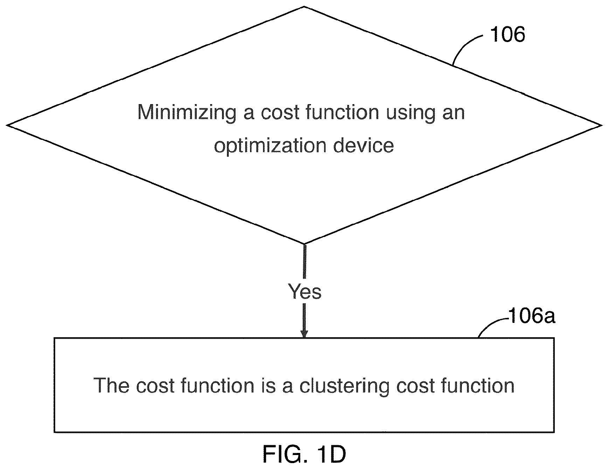

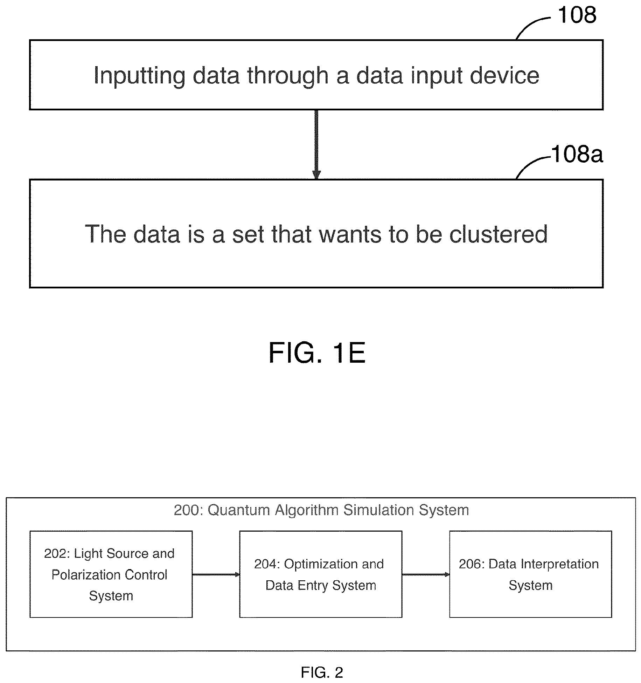

Referring first to FIGS. 1 and 1A, method 100 and sub-step 100a involve the use of electromagnetic waves, specifically laser beams, for simulating a quantum algorithm.

Electromagnetic waves encompass a broad range of frequencies, including radio waves and gamma rays. In this context, laser beams, a type of electromagnetic wave, are employed. Lasers generate light through optical amplification based on the stimulated emission of electromagnetic radiation.

The action here is the use of these laser beams. This implies that the laser beams serve as a resource in the process of simulating a quantum algorithm. Laser beams are chosen due to their unique properties such as coherence and monochromaticity, which are suitable for precision tasks.

Involved in this step are the laser beams and the quantum algorithm being simulated. The laser beams are manipulated to simulate the behavior of a quantum algorithm effectively. This is achieved by mapping the quantum state representation (Bloch sphere) to a polarization state representation (Poincare sphere), manipulating the polarization of the laser beams, minimizing a cost function, inputting data, and interpreting the result.

The aim of this process is to simulate a quantum algorithm using laser beams. This approach uses the properties of laser beams to perform a task typically requiring a quantum computer. The simulation can provide insights into the behavior of quantum algorithms and can be used for research and development.

Referring next to FIGS. 1 and 1B, step 102 and sub-steps 102a and 102b involve mapping a quantum state representation to a polarization state representation.

The quantum state representation is a Bloch sphere, a geometric representation used in quantum computing to visualize the state of a single qubit, the basic unit of quantum information. The polarization state representation is a Poincare sphere, a geometric tool used to describe the state of polarization of light.

The action here is the mapping of one representation to another. This involves a transformation or correspondence that allows the state of a qubit, represented by a point on the Bloch sphere, to be represented by a point on the Poincare sphere. This mapping is a step in the simulation of a quantum algorithm using laser beams, as it allows the quantum state of a qubit to be represented and manipulated using the polarization of light.

Involved in this step are the Bloch sphere, the Poincare sphere, and the quantum state of a qubit. The Bloch sphere and the Poincare sphere are manipulated so that a point on the Bloch sphere corresponds to a point on the Poincare sphere. This is done by adjusting the polarization of the laser beam, which is represented by a point on the Poincare sphere, to correspond to the state of the qubit, represented by a point on the Bloch sphere.

The aim of this process is to simulate a quantum algorithm using laser beams. By mapping the quantum state of a qubit to the polarization state of light, the behavior of the quantum algorithm can be simulated and studied using optical devices. This provides an approach to studying quantum algorithms without a quantum computer.

Referring next to FIGS. 1 and 1C, step 104 and sub-step 104a involve adjusting the polarization of electromagnetic waves using a device.

The electromagnetic waves are laser beams, a type of light that can have a specific polarization. Polarization refers to the orientation of the oscillations in a light wave.

The device is a set of plates and polarizers, optical components that can change the polarization of light passing through them.

The action here is the adjustment of polarization. This involves changing the plates and polarizers so that the polarization of the laser beam corresponds to the desired state on the Poincare sphere, which represents the state of polarization of light. This adjustment is a step in the simulation of a quantum algorithm using laser beams, as it allows the quantum state of a qubit to be represented and adjusted using the polarization of light.

Involved in this step are the laser beams, the plates and polarizers, and the Poincare sphere. The plates and polarizers are changed to adjust the polarization of the laser beam, which is represented by a point on the Poincare sphere. This is done by changing the plates and polarizers so that the polarization of the laser beam corresponds to the desired state on the Poincare sphere.

The aim of this process is to simulate a quantum algorithm using laser beams. By adjusting the polarization of the laser beams, the behavior of the quantum algorithm can be simulated and studied using optical devices. This provides an approach to studying quantum algorithms without a quantum computer.

Referring next to FIGS. 1 and 1D, step 106 and sub-step 106a involve reducing a cost function using a device.

The cost function is a clustering cost function, a mathematical function that measures the quality of a clustering solution. The device is a classical optimizer, a tool that can find the minimum of a function.

The action here is the reduction of the cost function. This involves changing the parameters of the clustering solution so that the value of the cost function is as small as possible. This reduction is a step in the simulation of a quantum algorithm using laser beams, as it allows the clustering of a set of data to be optimized.

Involved in this step are the clustering cost function and the classical optimizer. The classical optimizer changes the parameters of the clustering solution to reduce the value of the cost function. This is done by iteratively changing the parameters and evaluating the cost function until a minimum is found.

The aim of this process is to simulate a quantum algorithm using laser beams. By reducing the clustering cost function, the behavior of the quantum algorithm can be simulated and studied using computational devices. This provides an approach to studying quantum algorithms without a quantum computer.

Referring next to FIGS. 1 and 1E, step 108 and sub-step 108a involve entering data through a device.

The data is a set that is to be clustered, a collection of items or values to be grouped together based on certain criteria. The device is a module that allows the user to enter the data into the system.

The action here is the entering of data. This involves inputting the data set into the system using the device. This entering is a step in the simulation of a quantum algorithm using laser beams, as it provides the data that the algorithm will work on.

Involved in this step are the data set and the device. The device is used to enter the data set into the system. This is done by the user, who inputs the data set to be clustered.

The aim of this process is to simulate a quantum algorithm using laser beams. By entering the data set, the behavior of the quantum algorithm can be simulated and studied using the data to be clustered. This provides an approach to studying quantum algorithms without a quantum computer.

Referring back to FIG. 1, step 110 involves understanding the result of the reduction of the cost function using a device.

The result of the reduction of the cost function is the optimal clustering solution found by the optimizer. The device is a module that allows the user to understand the result of the clustering in terms of the original data.

The action here is the understanding of the result. This involves translating the optimal clustering solution into a form that the user can understand. This understanding is a step in the simulation of a quantum algorithm using laser beams, as it allows the user to understand the output of the algorithm.

Involved in this step are the result of the reduction of the cost function and the device. The device is used to translate the result into a form that the user can understand. This is done by the device, which understands the result of the clustering in terms of the original data.

The aim of this process is to simulate a quantum algorithm using laser beams. By understanding the result of the reduction of the cost function, the behavior of the quantum algorithm can be simulated and studied using the data to be clustered. This provides an approach to studying quantum algorithms without a quantum computer.

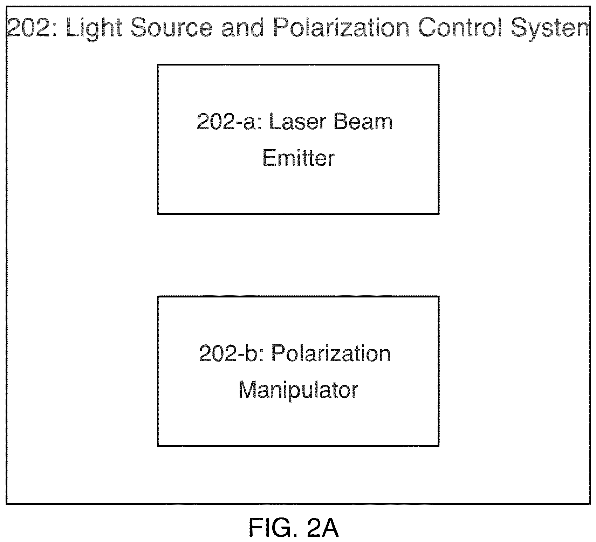

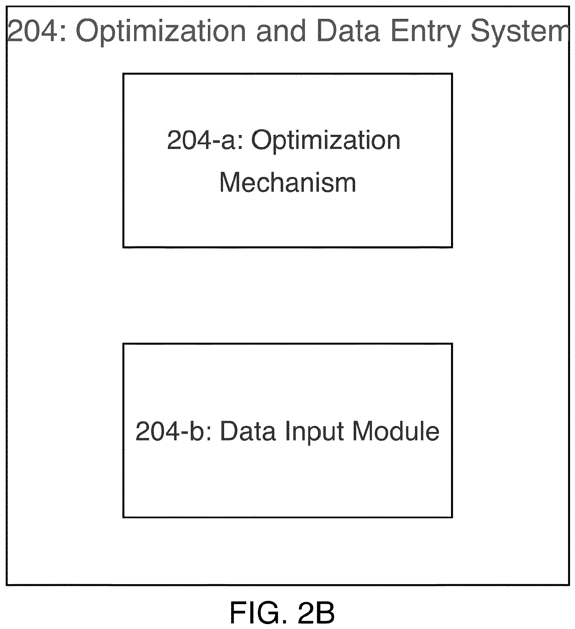

Referring next to FIG. 2, the Quantum Algorithm Simulation System, designated as component 200, is a system designed for simulating a quantum algorithm. This system is composed of several key elements, one of which is the Light Source and Polarization Control System, numbered as component 202. This component involves the use of light beams, such as a 650nm laser beam in some embodiments, to simulate the quantum algorithm. The light source emits these beams, which are then manipulated in terms of their orientation, a process also known as polarization. This polarization is achieved through the use of filters and lenses.

Referring to FIGS. 2 and 2A, component 202 includes a sub-component, the Laser Beam Emitter (202a), which is responsible for the emission of the 650nm laser beam. Another sub-component, the Polarization Manipulator (202b), is tasked with manipulating the polarization of the light beams. This sub-component uses a detection module to measure the polarization of the light beams.

The Quantum Algorithm Simulation System operates by simulating a quantum algorithm, a process that is achieved through the use of light beams. The system begins its operation with the emission of a laser beam, a task carried out by the Laser Beam Emitter. This laser beam serves as the primary medium for the simulation of the quantum algorithm.

Once the laser beam is emitted, it is then subjected to a process of polarization. This is where the Polarization Manipulator takes over. The polarization of the light beams is manipulated using filters and lenses. This manipulation of polarization allows for the mapping of a quantum state space to a polarization state space, a process that is essential for the simulation of the quantum algorithm.

The polarization of the light beams is continuously adjusted and optimized throughout the operation of the system. This is achieved through the use of a detection module, which measures the polarization of the light beams. The measurements obtained from the detection module are then used to adjust and optimize the polarization of the light beams, ensuring that the simulation of the quantum algorithm is as accurate as possible.

The Light Source and Polarization Control System, denoted as component 202, is part of the Quantum Algorithm Simulation System. This component is responsible for the emission and manipulation of light beams, specifically a 650nm laser beam, which serves as the primary medium for the simulation of the quantum algorithm.

Component 202 is composed of two sub-components. The first is the Laser Beam Emitter, numbered as 202a. This sub-component is responsible for the emission of the 650nm laser beam. The second sub-component is the Polarization Manipulator, numbered as 202b. This sub-component is tasked with manipulating the polarization of the light beams, a process that is achieved through the use of filters and lenses.

The Polarization Manipulator also uses a detection module to measure the polarization of the light beams. These measurements are then used to adjust and optimize the polarization of the light beams, ensuring that the simulation of the quantum algorithm is as accurate as possible.

Component 202 operates by emitting a laser beam, manipulating its polarization, and continuously adjusting and optimizing this polarization. This process is carried out by the various elements that comprise component 202, each playing a specific role in the operation of the system. The emission of the laser beam, the manipulation of its polarization, and the continuous adjustment and optimization of this polarization are all key processes in the operation of the Light Source and Polarization Control System.

Referring to FIGS. 2 and 2B, the Optimization and Data Entry System, denoted as component 204, is part of the Quantum Algorithm Simulation System. This component is responsible for optimizing the configuration of the polarization manipulation device to minimize a cost function and for inputting the cost function.

Component 204 is composed of two sub-components. The first is the Optimization Mechanism, numbered as 204a. This sub-component minimizes a cost function using a traditional optimizer. The second sub-component is the Data Input Module, numbered as 204b. This sub-component inputs the cost function depending on a data set that wants to be clustered. This is achieved through the use of an input module. Component 204 operates by minimizing a cost function and inputting it into the system. This process is carried out by the various elements that comprise component 204. The minimization of the cost function and the inputting of it into the system are key processes in the operation of the Optimization and Data Entry System.

Referring back to FIG. 2, the Data Interpretation System, denoted as component 206, is part of the Quantum Algorithm Simulation System. This component is responsible for interpreting the result of the minimization of the cost function.

Component 206 is composed of entities that contribute to the interpretation of the data. These entities include the data interpretation device, the original data, and the readout module. The data interpretation device interprets the result of the minimization of the cost function. The original data is used as a reference for the interpretation of the result. The readout module is used to interpret the result of the clustering.

Component 206 operates by interpreting the result of the minimization of the cost function. This process is carried out by the data interpretation device. The original data is used as a reference for the interpretation of the result. The interpretation of the result is continuously adjusted and optimized throughout the operation of the system. This is achieved through the use of a readout module. The readout module interprets the result of the clustering. The interpretation of the result and the continuous adjustment and optimization of this interpretation are key processes in the operation of the Data Interpretation System.

While the applicant's teachings described herein are in conjunction with various embodiments for illustrative purposes, it is not intended that the applicant's teachings be limited to such embodiments as the embodiments described herein are intended to be examples. On the contrary, the applicant's teachings described and illustrated herein encompass various alternatives, modifications, and equivalents, without departing from the embodiments described herein, the general scope of which is defined in the appended claims.

## Claims

1. A method for simulating a quantum algorithm, comprising:
providing a light source for emitting electromagnetic waves;
mapping a quantum state representation to a polarization state representation;
manipulating a polarization of the electromagnetic waves using a polarization manipulation device;
minimizing a cost function using an optimization device, thereby producing an optimal clustering solution;
inputting data through a data input device; and
interpreting the optimal clustering solution using a data interpretation device.

2. The method of claim 1, wherein the electromagnetic waves are laser beams.

3. The method of claim 1, wherein the quantum state representation is a Bloch sphere.

4. The method of claim 3, wherein the polarization state representation is a Poincare sphere.

5. The method of claim 1, wherein the polarization manipulation device comprises a plurality of plates and polarizers.

6. The method of claim 1, wherein the cost function is a clustering cost function.

7. The method of claim 1, wherein the data is a set that is to be clustered.

8. A system for simulating a quantum algorithm, comprising:
a light source for emitting electromagnetic waves;
a polarization manipulation device for manipulating a polarization of the electromagnetic waves;
a detection module for measuring a polarization of the electromagnetic waves;
an optimization device for optimizing a configuration of the polarization manipulation device to minimize a cost function, thereby producing an optimal clustering solution;
a data input device for inputting the cost function; and
a data interpretation device for interpreting the optimal clustering solution.

9. The system of claim 8, wherein the light source is a laser beam.

10. The system of claim 8, wherein the polarization manipulation device comprises plates and polarizers.

11. The system of claim 8, wherein the optimization device is a classical optimizer.

12. The system of claim 8, wherein the cost function is a clustering cost function.

13. The system of claim 8, wherein the data input device inputs the cost function depending on a data set that is to be clustered.

14. The system of claim 13, wherein the data interpretation device interprets the optimal clustering solution in terms of the data set that is to be clustered.

15. The system of claim 8, wherein the detection module further comprises a measurement module configured to measure the polarization of the electromagnetic waves.
